# FASCICULE DE BREVET EUROPEEN

(11) **EP 1 941 571 B1**
(45) Date de publication et mention de la délivrance du brevet: **29.02.2012**
(21) Numéro de dépôt: 06807095.2
(22) Date de dépôt: 09.10.2006
(51) Int. Cl.: H01M 8/02, H01M 8/24

(54) **EMPILEMENT ETANCHE DE PILE A COMBUSTIBLE**
ABGEDICHTETER BRENNSTOFFZELLENSTAPEL
SEALED FUEL CELL STACK

(30) Priorité: 11.10.2005 FR 0553093
(43) Date de publication de la demande: 09.07.2008
(73) Titulaire: Commissariat à l'Énergie Atomique et aux Énergies Alternatives, 75015 Paris (FR)
(72) Inventeur: BIANCHI, Luc, F-37260 Artannes Sur Indre (FR); GUENADOU, David, F-37000 Tours (FR); CORNILLEAU, Laure, F-37300 Joue Les Tours (FR); METHOUT, Séchel, F-37000 Tours (FR)
(74) Mandataire: Poulin, Gérard
(86) Numéro de dépôt international: PCT/EP2006/067209
(87) Numéro de publication internationale: WO 2007/042503

(56) Documents cités:
- DE-A1- 10 124 853
- US-A- 5 399 442
- US-A1- 2002 068 212
- US-A1- 2003 031 914
- US-B1- 6 596 427

## Description

### Domaine de l'invention

L'invention concerne les piles à combustibles, en particulier celles fonctionnant à haute température et étant du type SOFC (Solid Oxid Fuel Cell), c'est-à-dire les piles à combustible à électrolytes oxydes solides.

### Art antérieur et problème posé

Les piles à combustible du type SOFC fonctionnent avec un premier élément réactif qui est un combustible, tel que l'hydrogène, qui réagit électrochimiquement avec un second réactif, un oxydant tel que l'oxygène, pour produire un courant électrique continu et de la chaleur. Les températures de fonctionnement sont alors comprises entre 500 et 1 000°C. Une cellule de ce type de pile à combustible est constituée de deux électrodes poreuses et conductrices électroniquement, à savoir une anode et une cathode séparées par un électrolyte isolant électroniquement, mais conducteur ionique. L'anode est généralement constituée d'un élément, appelé "cermet", association d'une céramique et d'un métal, du type nickel-zircone, alors que la cathode peut être constituée de manganite de lanthane dopée. Le matériau constituant l'électrolyte le plus couramment utilisé est la zircone dopée à l'yttrine.

Dans un tel type de pile à combustible, l'oxygène réagit à la cathode avec des électrons pour donner des ions oxydes qui migrent à travers l'électrolyte, jusqu'à l'anode. Le combustible (l'hydrogène) injecté à l'anode réagit avec les ions oxydes pour former de l'eau et des électrons qui circulent de l'anode à la cathode en traversant un circuit électrique externe.

Or, chaque cellule élémentaire de pile à combustible, composée d'une anode, d'un électrolyte et d'une cathode produit une différence de potentiel ne dépassant pas généralement un volt. Pour atteindre des différences de potentiels plus élevées, qui facilitent la conversion de puissance en aval de la pile à combustible de l'énergie électrique ainsi produite, plusieurs de ces cellules sont connectées électriquement en séries et regroupées en batteries, appelées "stack", en anglais. Une telle batterie de cellules est constituée donc de plusieurs cellules séparées par des plaques bipolaires et appelées également "interconnecteurs". Un tel interconnecteur est donc conducteur électronique et est disposé entre l'anode et la cathode de deux cellules adjacentes. Il permet de collecter le courant électrique produit, et dans certains cas de distribuer les gaz aux électrodes, voire de collecter les produits de réactions et gaz non utilisés en sortie. Ainsi un empilement de plusieurs cellules élémentaires permet de constituer une pile à combustible.

Un des problèmes principaux de ces empilements est l'étanchéité. En effet, pour assurer le bon fonctionnement d'une pile constituée d'un tel empilement, il est nécessaire de séparer parfaitement les réactifs, tant au niveau de la distribution qu'au niveau des cellules élémentaires. La palette de matériaux pouvant remplir cette fonction à haute température, à savoir 500 à 1 000°C, et très réduite, du fait des contraintes imposées par la diversité des matériaux composant, un tel type de pile à combustible (SOFC). La séparation des gaz est d'autant plus difficile à obtenir qu'il faut assurer un contact électrique entre les différentes cellules élémentaires et leur connecteur ou interconnecteur respectif.

Actuellement, peu de matériaux sont à même de répondre aux besoins de ce type de pile à combustible (SOFC), notamment en considérant cette condition d'étanchéité. De nombreux documents de brevets proposent des solutions ingénieuses de distribution de gaz comburant et combustible, ou de souplesse des empilements, mais ne proposent pas de solutions d'étanchéité globale pour une pile constituée d'un tel empilement.

On cite pour exemple le document de brevet WO-02/17 419 A2, qui décrit une architecture sans étanchéité, mais pour laquelle il est impossible de récupérer les gaz inutilisés qui brûlent en périphérie de la batterie.

Le document de brevet US-6 051 330 décrit une étanchéité des cellules élémentaires par densification localisée des électrodes poreuses et par compression de certaines zones avant le frittage. Cette technique, bien qu'efficace ne permet pas de résoudre tous les cas de figures et d'autres modes d'étanchéité sont nécessaires au bon fonctionnement d'une telle pile.

Enfin, le document de brevet US-6 045 935 décrit un système utilisant des joints en mica pour réaliser l'étanchéité du circuit de distribution des gaz combustible et comburant qui est éloigné des zones chaudes de l'empilement et en utilisant une pression mécanique pour les arrivées de gaz comburant et combustible sur la batterie. L'étanchéité au niveau des cellules élémentaires n'est pas abordée, mais il est précisé que certaines fuites sont tolérées lors du fonctionnement d'un tel type de piles.

Le but de l'invention est donc de proposer un type d'empilement de piles à combustible équipé d'un système d'étanchéité efficace n'ayant pas d'interférences avec le système d'interconnexion électrique des cellules élémentaires entre elles.

### Résumé de l'invention

A cet effet, un premier principal de l'invention est une pile à combustible du type à oxyde solide constituée par un empilement de cellules élémentaires du type électrode/électrolyte/électrode, disposées en alternance avec des interconnecteurs.

Selon l'invention, on utilise un joint unique vertical, fermé, entourant l'empilement. Ainsi, l'étanchéité de l'intérieur du circuit de chaque cellule de base est réalisée vis-à-vis de l'extérieur. En outre, l'étanchéité globale du système est assurée en utilisant un seul joint qui du fait de son positionnement et de son architecture permet de garantir simultanément l'étanchéité au niveau des réseaux d'alimentation en gaz, de récupération des gaz et entre les différentes cellules de l'empilement. De plus, la continuité de la connexion électrique des électrodes les unes aux autres n'est pas interrompue par d'éventuels joints placés entre les éléments de l'empilement. Ceci constitue un élément très important de l'invention.

Dans le but de protéger cet ensemble, on utilise un tube de confinement placé autour du joint.

Dans une réalisation préférentielle de l'invention, des trous latéraux de passage peuvent être disposés dans le joint unique. Des trous d'entrée et de sortie peuvent être disposés dans l'éventuel tube de confinement pour réaliser la distribution et l'échappement des gaz combustible et comburant.

Une réalisation particulière du tube de confinement consiste à ne prévoir d'une forme dite ouverte, c'est-à-dire d'une section en escargot, le joint vertical étant également d'une sélection correspondante avec un diamètre progressif le long de son périmètre, et dotée d'une patte de prolongement au niveau d'un recouvrement des deux extrémités du tube de confinement étant alors positionnées à des rayons différents.

Un deuxième objet principal de l'invention est une pile à combustible du type à oxyde solide (SOFC) constituée d'un empilement de cellules élémentaires électrode/électrolyte/électrode disposées en alternance avec des interconnecteurs, et équipée d'au moins deux tubes d'amenée de gaz combustible et du gaz oxydant à l'intérieur de l'empilement.

Selon l'invention, pour chaque tube d'amenée placé à l'intérieur de l'empilement, on utilise un unique joint vertical fermé autour de chaque tube d'amenée, l'échappement des gaz se faisant par toute la surface externe de l'empilement.

### Liste des figures

L'invention et ses différentes caractéristiques techniques seront mieux comprises à la lecture de la description, accompagnée de plusieurs figures représentant respectivement :
- figure 1, une vue de dessus de la section de la pile à combustible selon une première réalisation avec des lignes de coupe relatives aux figures suivantes ;
- figure 2, une première coupe frontale de la première réalisation de l'invention ;
- figure 3, une deuxième coupe frontale selon un deuxième angle de la première réalisation de l'invention ;
- figure 4, une troisième coupe frontale selon un troisième angle de la première réalisation selon l'invention ;
- figure 5, une quatrième coupe frontale selon un quatrième angle de cette première réalisation de l'invention ;
- figure 6, une coupe transversale d'une variante de la première réalisation de l'invention ;
- figure 7, une vue de dessus d'une deuxième réalisation de l'invention avec des indications de lignes de coupe concernant les figures suivantes ;
- figure 8, une première coupe frontale de la deuxième réalisation de l'invention ;
- figure 9, une deuxième coupe frontale de la deuxième réalisation de l'invention ;
- figure 10, une troisième coupe frontale de la deuxième réalisation de l'invention.

### Description détaillée de deux réalisations de l'invention

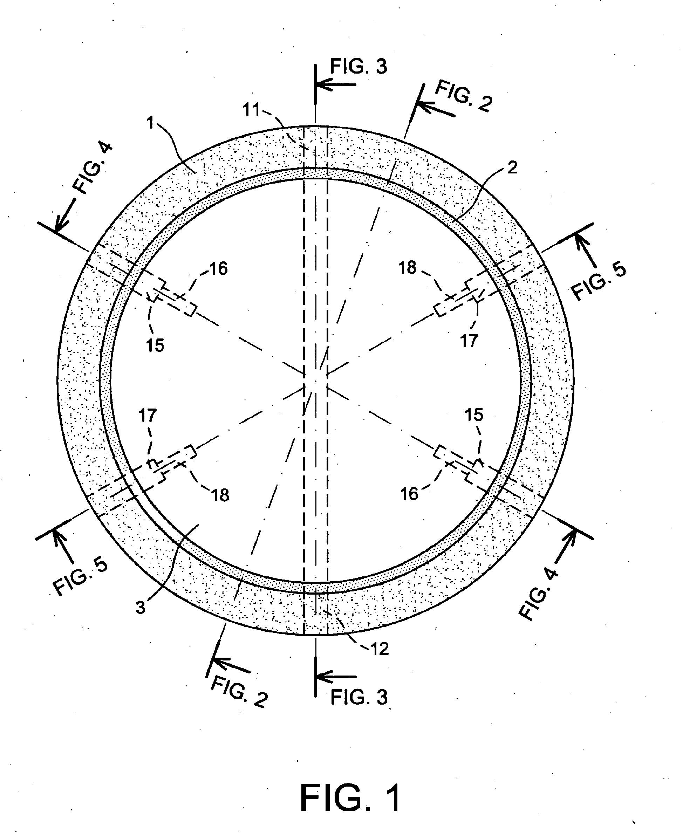

La figure 1 montre en vue de dessus, une pile à combustible selon l'invention, constituée d'une batterie de cellules élémentaires empilées dans un tube de confinement 1 fermé. L'empilement est fermé par un diffuseur cathodique de fermeture 3 qui est en fait un des deux interconnecteurs d'extrémités. Il est isolé du tube de confinement 1 par un joint vertical 2. En fait, ledit joint 2 est positionné entre la paroi externe de l'empilement et la paroi interne du tube de confinement 1 placé autour de l'empilement. D'un point de vue pratique, le joint 2 peut être soit déposé par un procédé adapté, tel que la projection thermique, par exemple, directement sur la paroi intérieure du tube de confinement 1, ou bien s'il est autostructurant, il peut être mis en place entre les deux éléments, lors de l'assemblage.

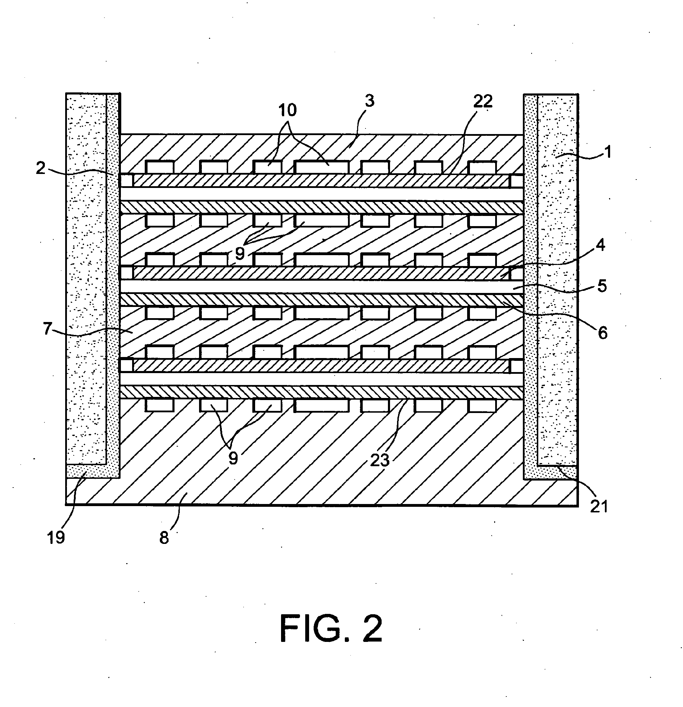

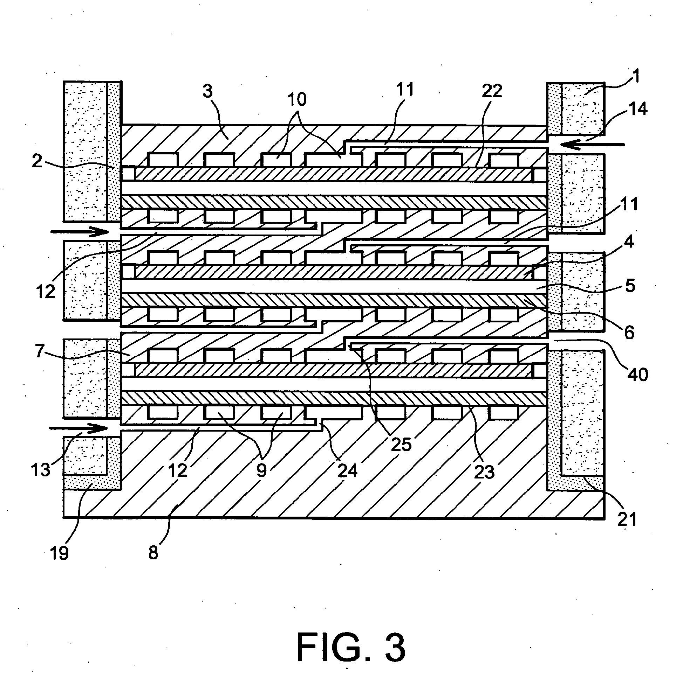

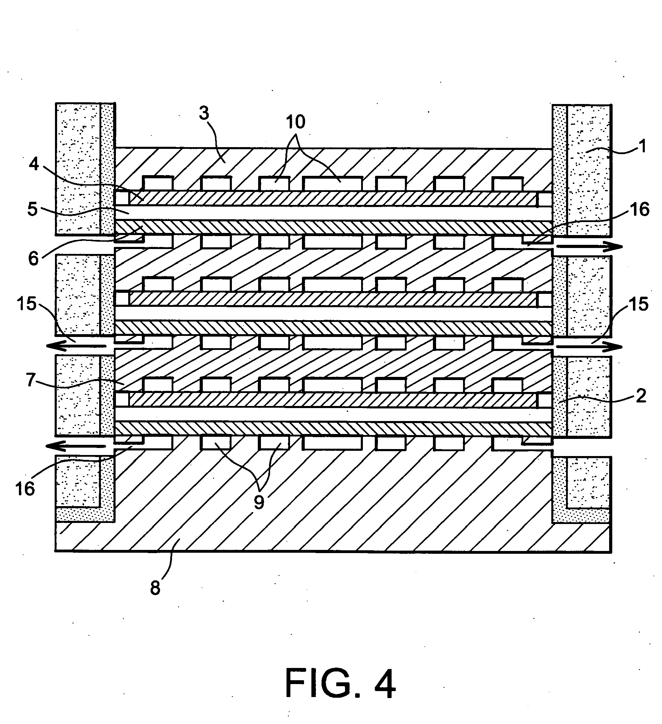

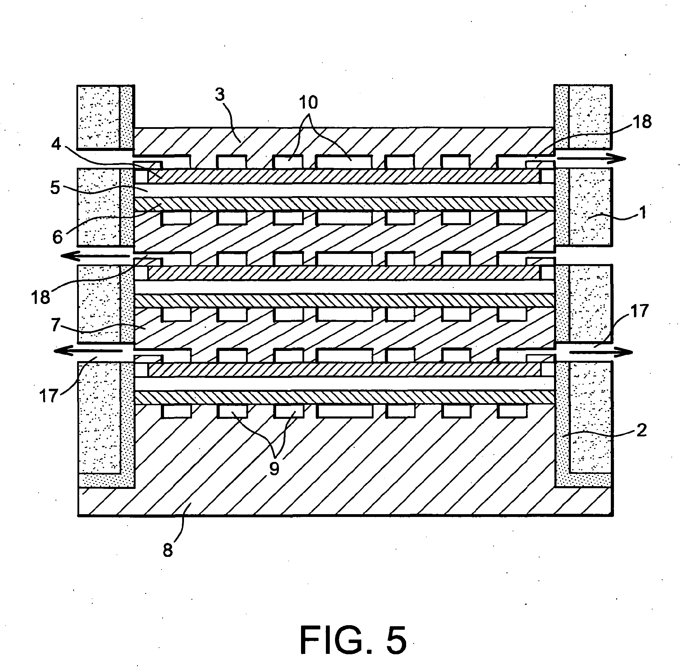

Sur cette figure 1, sont représentés les différents plans de coupe des figures 2, 3, 4 et 5 par des axes repérés par des chiffres correspondants à la figure concernée. Par rapport au plan de coupe de la figure 2, le plan de coupe de la figure 3 est décalé angulairement de 20° d'un premier côté, tandis que le plan de coupe relatif à la figure 4 est décalé d'un angle de 90° du même côté. D'autre part, le plan de coupe de la figure 5 est décalé de 40° de l'autre côté.

On note la présence, en traits interrompus, de deux canaux d'alimentation 11 et 12, chacun ayant la longueur d'un rayon et se dirigeant vers le centre.

Sont également représentées, en traits interrompus, deux sorties de combustible 15, diamétralement opposées dans le plan de figure 4. De même, deux sorties de gaz oxydants 17 sont représentées, diamétralement opposées dans le plan de la figure 5.

La figure 2 montre donc, selon une première coupe frontale, une première réalisation d'une pile à combustible selon l'invention. Trois cellules élémentaires ont été représentées dans cet empilement, mais ce chiffre n'est pas figé, une telle batterie de cellules élémentaires pouvant comprendre un nombre quelconque de cellules de base. Chaque cellule élémentaire comprend au moins une cathode 4, un électrolyte 5 et une anode 6 placés dans cet ordre, les uns contre les autres. La géométrie de ces cellules élémentaires n'est pas limitée à des cellules planes de section cylindrique ou prismatique, des cellules à trois dimensions pouvant être envisagées, par exemple en forme de gaufrier, ondulées, ou renforcées par des nervures, tout comme toutes autres géométries.

Ces trois cellules élémentaires sont intercalées avec des interconnecteurs (ou plaques bipolaires) 7. Un diffuseur cathodique de fermeture 3 ferme l'empilement dans sa partie supérieure, de même qu'un diffuseur anodique support 8 dans sa partie inférieure. L'empilement est maintenu dans sa position par le tube de confinement 1 qui entoure l'ensemble sur toute sa hauteur, excepté au niveau d'un épaulement inférieur 19 du diffuseur anodique support 8. Entre l'empilement des cellules élémentaires et des interconnecteurs 7 et le tube de confinement 1, se trouve un joint vertical 2 unique qui débouche dans la partie supérieure de l'empilement comme à l'extérieur de la circonférence par une base inférieure 21 perpendiculaire au reste du joint vertical 2, entre la partie inférieure du tube de confinement 1 et l'épaulement 19 du diffuseur anodique support 8.

Chaque interconnecteur 7, tout comme le diffuseur anodique support 8 et le diffuseur cathodique de fermeture 3, possède des canaux de distribution 10 du comburant et du combustible. L'anode 6 de la première cellule élémentaire est disposée contre des contacts électriques anodiques 23 du diffuseur anodique support 8, afin d'assurer le transfert des électrons entre les deux éléments. Des contacts électriques cathodiques 22 de chaque interconnecteur 7 sont placés en contact avec la cathode 4 de la cellule élémentaire, précédemment citée. Une seconde cellule élémentaire et donc disposée sur les contacts anodiques 23 de l'interconnecteur 7 suivant. Les contacts électriques cathodiques 22 du diffuseur cathodique de fermeture 3 sont placés sur la cathode 4 de la dernière cellule élémentaire de l'empilement et constitue le pôle négatif de la batterie.

La figure 3 montre, en coupe frontale, selon un autre diamètre par rapport à la figure 2, l'arrivée du comburant et du carburant, à savoir un combustible et un gaz oxydant. On retrouve sur cette figure 3, trois cellules élémentaires, avec leurs trois éléments constitutifs, à savoir une cathode 4, un électrolyte 5 et une anode 6, mais aussi deux interconnecteurs 7, le diffuseur anodique support 8 supportant l'ensemble et le diffuseur cathodique de fermeture 3 sur la partie supérieure. Ce dernier possède un canal d'alimentation 11 en air débouchant dans des canaux de distribution 10. De même, le diffuseur anodique support 8 possède au moins un canal d'alimentation 12 en oxygène débouchant dans des canaux de distribution 9. Il en est de même pour les interconnecteurs 7 possédant des canaux d'alimentation 11 et 12 débouchant chacun dans des canaux de distribution 10 et 9.

L'alimentation en gaz de ces différents canaux d'alimentation 11 et 12 se fait au moyen de plusieurs trous de passage tels que des trous d'entrée 13 et 14, respectivement d'entrée de combustible et de gaz oxydant, pratiqués dans la paroi du tube de confinement 1. En correspondance, le joint vertical possède un même nombre de trous de passage 40 correspondant. Ainsi, le combustible est distribué dans les entrées d'alimentation 13, puis circule dans les canaux d'alimentation de combustible 12 pour être injecté dans la zone centrale des anodes 6.

Cette injection du combustible au niveau des anodes 6 est représentée comme étant effectuée au centre pour des raisons d'homogénéité de température dans le système, mais cette injection peut s'effectuer à d'autres endroits. La face des interconnecteurs 7 placée en regard des anodes 6 est constituée d'un arrangement de gorges constituant le canal de distribution de combustible 9 et d'excroissances constituant les contacts électriques anodiques 23. Ainsi, la distribution du combustible aux anodes 6 est effectuée tout en assurant la continuité électrique de l'empilement. Les canaux de distribution du combustible 9 forment donc un réseau interconnecté pour répartir de manière homogène le gaz combustible sur toute la surface des anodes 6, à partir d'un unique point d'injection du combustible 24 qui est central.

Afin de simplifier la répartition du gaz combustible et la géométrie des contacts électriques anodiques 23 sur la surface anodique, il est possible de multiplier le nombre de points d'injection 24. Le motif géométrique, ainsi que la forme des canaux de distribution du combustible 9 ne sont pas figés, tout autre type de géométrie pouvant être envisagé. On pense en particulier aux spirales, aux labyrinthes, aux plots, et d'autres formes. Une géométrie similaire est présente sur la face du diffuseur anodique support 8, en regard de l'anode 6 de la première cellule élémentaire et est formée aussi de canaux de distribution du combustible 9 et de contacts électriques anodiques 23. Une fois distribué dans les canaux de distribution de combustible 9, celui-ci peut pénétrer dans les anodes 6 pour y être oxydé. Ces anodes 6 sont poreuses pour offrir au combustible une surface d'échange maximale, afin de faciliter son oxydation.

Cette même figure 3 présente également le système d'alimentation en gaz oxydant des cellules de base. Un tel gaz oxydant est distribué par des entrées de gaz oxydant 14, puis circule dans des canaux d'alimentation 11, en gaz oxydant pour être injecté dans la zone centrale des cathodes 4. L'injection de ce gaz oxydant au niveau des cathodes 4 est également représentée de manière à être effectuée au centre pour des mêmes raisons d'homogénéité de température dans le système, mais cette injection peut également s'effectuer à d'autres endroits.

La face des interconnecteurs 7 placée en regard des cathodes 4 est l'image de celle placée en regard des anodes 6, à savoir un réseau de canaux de distribution 10 du gaz oxydant entremêlé de contacts électriques cathodiques 22. Une géométrie similaire est présente sur la face des diffuseurs cathodiques de fermeture 3, formée elle aussi de canaux de distribution 10 du gaz oxydant, et de contacts électriques cathodiques 22. De même que pour le combustible, le gaz oxydant peut être injecté par un ou plusieurs points d'injection 25 entre les canalisations d'alimentation 11 et les canaux de distribution 10. Une fois distribué dans les canaux de distribution 10, le gaz oxydant peut ainsi pénétrer les cathodes 4 pour y être réduit. Ces cathodes 4 sont poreuses, de manière à offrir, au gaz oxydant, une surface d'échange maximale, afin de faciliter sa réduction.

Il est important de réaliser les entrées d'alimentation 13 et 14 avec un diamètre plus grand que celui des canaux d'alimentation 11 et 12, afin de s'affranchir des tolérances d'usinage, d'assemblage, des défauts de positionnement, lors du montage. En outre, cela permet d'assurer une section de passage minimale pour les gaz, en cas de différence d'altitude entre l'axe des entrées d'alimentation 13 et 14 dans le tube de confinement 1 et les canaux d'alimentation 11 et 12 de l'empilement interne. Cette éventuelle différence d'altitude peut être en effet due à la différence de dilatation en température des matériaux constituants les différents éléments de la pile à combustible. On peut également réaliser l'inverse, à savoir percer les entrées d'alimentation 13 et 14 avec un diamètre inférieur à celui du canal d'alimentation 11 et 12.

La figure 4 montre le circuit d'évacuation et de récupération du combustible dans la première réalisation de l'invention.

Une partie du combustible, introduit comme décrit précédemment relativement à la figure 3, qui n'a pas réagi aux anodes 6, est chassée par lé flux de combustible circulant dans les canaux de distribution 9. Pour ceci, les canaux de distribution 9 du combustible se terminent par une extrémité de sortie du combustible 16 située dans les interconnecteurs 7 et une dans le diffuseur cathodique 3, en contact avec l'anode 6. Bien entendu, le joint vertical 2 est percé en correspondance avec des sorties de combustible 15 pratiquées dans le tube de confinement 1.

En référence à la figure 5, une sortie de récupération du gaz oxydant excédentaire est organisée de la même manière que la récupération du combustible décrit dans les paragraphes précédents. Ici, la sortie du gaz oxydant 18 constitue une extrémité de sortie des canaux de distribution 10 du gaz oxydant, ceux-ci étant placés contre les cathodes 4. Ces canaux de distribution ont chacun une extrémité de sortie de gaz oxydants 18 se trouvant également dans les interconnecteurs 7 et une supplémentaire dans le diffuseur cathodique de fermeture 3. Des sorties de gaz oxydants 17 sont pratiquées dans le tube de confinement 1, de même que des trous correspondants dans le joint vertical 2.

Là encore, il est important de réaliser les sorties de combustible 15 (figure 4) et les sorties de gaz oxydants 17 avec un diamètre de perçage plus grand que celui des extrémités de sorties de combustible 16 et des extrémités de sortie de gaz oxydants 18, afin de s'affranchir des tolérances d'usinage et des défauts de positionnement, lors du montage. En outre, cela permet d'assurer une section de passage minimal pour les gaz, en cas de différence d'altitude entre l'axe des sorties de gaz 15 et 17 dans le tube de confinement 1 et les extrémités de sortie de gaz 16 et 18 de l'empilement interne. On rappelle qu'une telle différence d'aptitude peut être due aux différentiels provoqués par la dilatation en température des différents matériaux constituant cet empilement.

De même que pour le combustible, on peut également envisager l'inverse, c'est-à-dire des extrémités de sortie de gaz 16 et 18 avec une section plus importante que celle des sorties 15 et 17 pratiquées dans le tube de confinement 1. Sur ces figures 1, 2, 3 et 4, les entrées et sorties pour chaque gaz ont été représentées par deux, mais il est possible d'utiliser un nombre quelconque de ces entrées et sorties à la fois. De même, on a représenté qu'un seul point d'entrée de ces gaz au niveau des cellules. Pour des raisons d'homogénéisation du flux de ces gaz, il est possible de multiplier ces points d'entrée.

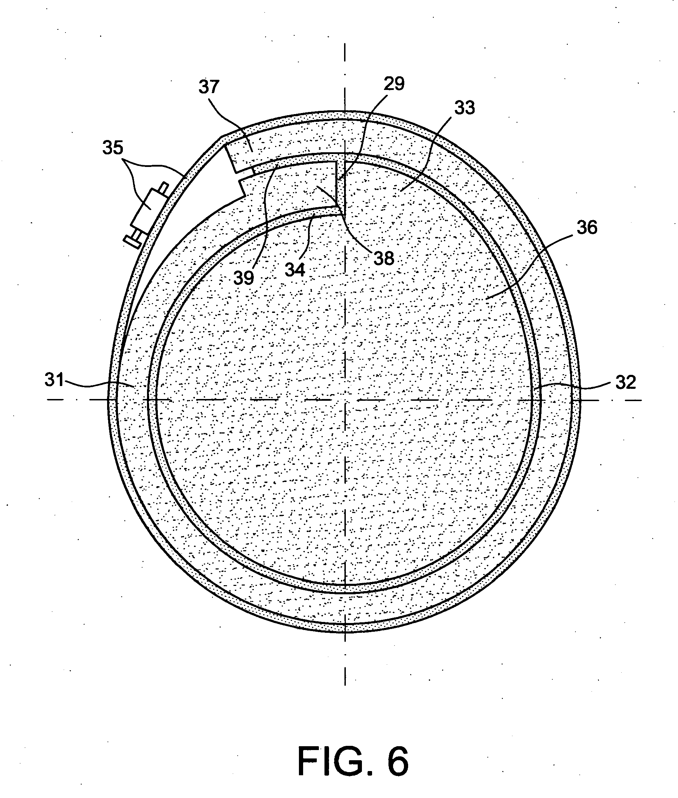

Une variante de cette première réalisation est représentée par la figure 6, en vue de dessus. On constate que la section de l'empilement n'est pas symétrique, tout comme le tube de confinement et le joint, mais présente une configuration dite "ouverte". En fait, le tube de confinement 1 comprend une section possédant un diamètre progressif, c'est-à-dire en forme d'escargot et se recouvrant au niveau de ces deux extrémités 37 et 38. De même, le joint vertical 32 a également une section à diamètre progressif, avec une extrémité 39 extérieure recouvrant une extrémité intérieure 34 terminée radialement par un prolongement radial 29 pour rejoindre l'extrémité extérieure 38.

Bien entendu, la forme des pièces ou des éléments se trouvant dans l'empilement, tels que les interconnecteurs, le diffuseur cathodique de fermeture, le diffuseur anodique support et les électrolytes ont une forme adaptée à celle de la paroi intérieur du tube de confinement 31, comme représenté sur cette figure 6 pour le diffuseur cathodique de fermeture en 33. Afin d'éviter des gradients thermiques trop importants, il est préférable de garder une forme circulaire pour les cathodes et les anodes. De plus, la géométrie représentée sur cette figure 6 n'est nullement restrictive, d'autres formes de cubes de confinement pouvant être envisagées. C'est le principe du tube de confinement ouvert, qui est à retenir.

Concernant les autres points de fonctionnement, le principe reste identique aux configurations précédemment décrites. Néanmoins, il faut veiller à ce que les conduits d'entrée et de sortie des gaz restent, après dilatation, placés en regard avec les canaux d'alimentation et d'évacuation de ces gaz.

L'avantage d'une telle géométrie est d'autoriser une dilatation radiale en plus des dilatations axiales.

En effet, le tube permettant ainsi de s'adapter au diamètre local de l'empilement en glissant sur lui-même, par l'intermédiaire du joint vertical 32, qui est visqueux à la température de fonctionnement. L'empilement interne 36 placé a l'intérieur du tube de confinement 31, et comprenant les interconnecteurs, les cellules, le diffuseur anodique support et le diffuseur cathodique de fermeture peut se dilater dans toutes les directions. De plus, le diamètre de l'empilement peut être contrôlé, l'assemblage des cellules de base et des interconnecteurs étant plus aisé. L'étanchéité est garantie à haute température par un effet de bridage, appliqué à l'ensemble, en fonction des dilatations de ce dernier, par l'intermédiaire d'un système de serrage 35 placé autour du tube de confinement 31.

Les figures suivantes sont relatives à un deuxième exemple de réalisation, n'utilisant pas de tube de confinement unique placé autour de l'empilement. Cette architecture possède deux tubes d'amenée du gaz oxydant 53 et deux tubes d'amenée du combustible 56. Ces quatre tubes d'amenée 53 et 56 sont revêtus chacun, sur leur surface externe, d'un unique joint vertical 52. Dans cet exemple de réalisation, quatre tubes d'amenée sont représentés, ce chiffre ne constituant qu'un exemple de réalisation non restrictif.

Dans cette réalisation, on ne prévoit pas de récupérer les gaz non utilisés. En effet, ceux-ci brûlent à la périphérie de l'empilement. La batterie est ainsi constituée d'un empilement similaire d'interconnecteurs, de cellules de base traversées par ces tubes d'amenées 53 et 56. La continuité électrique est garantie par les contacts des interconnecteurs, des cellules élémentaires, du diffuseur cathodique de fermeture et du diffuseur anodique support entre eux, comme montré dans la réalisation précédente.

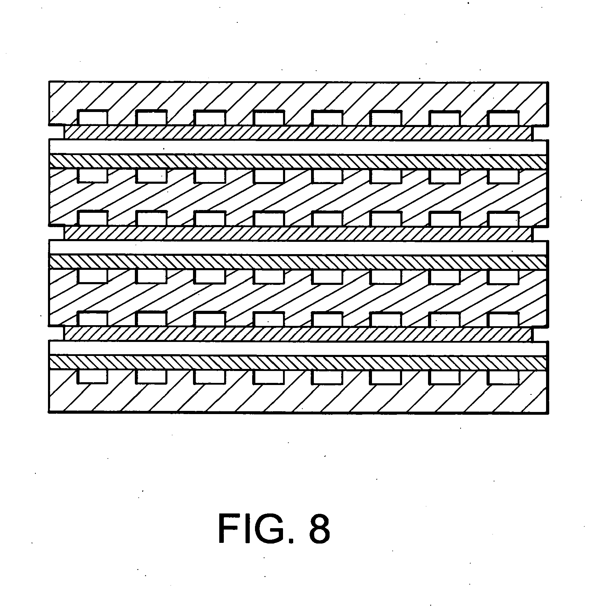

La figure 8 est une coupe frontale passant par le centre de l'empilement, au niveau des arrivées des gaz oxydants. On constate qu'aucun tube d'amenée ne traverse l'empilement au centre de ce dernier.

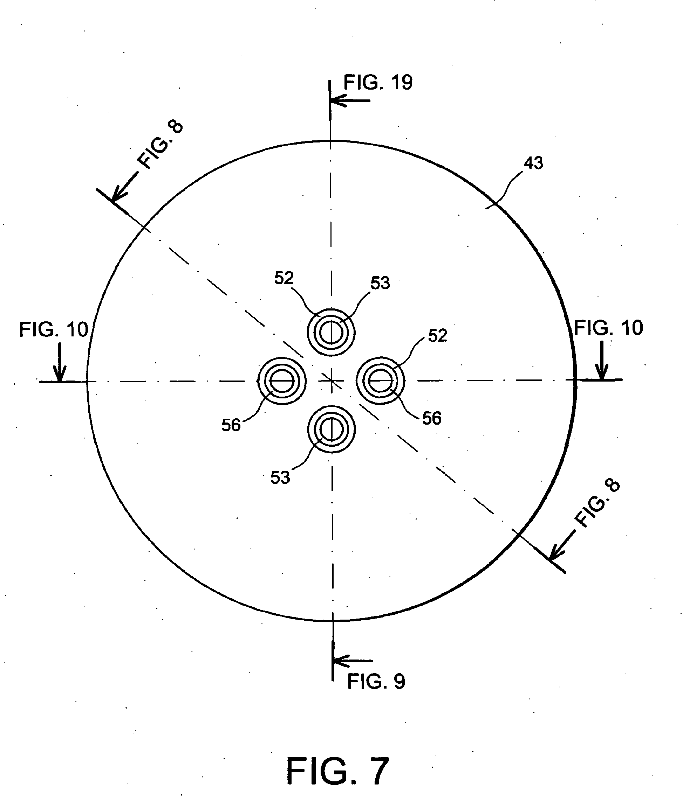

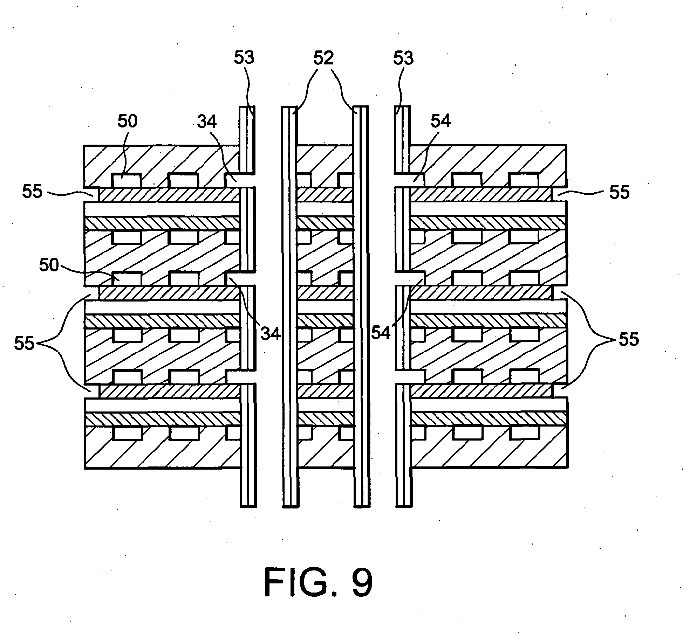

La figure 9 est une autre coupe frontale de cet empilement passant à travers les tubes d'amenée du gaz oxydant référencés 53 sur la figure 7. Ceux-ci distribuent le gaz oxydant à chaque niveau des cellules élémentaires par des perçages d'alimentation en gaz oxydant 54, qui débouchent dans des canaux de distribution du gaz oxydant 50. Ces derniers sont interconnectés de manière à permettre une répartition homogène du gaz oxydant sur toute la surface des cathodes. Le gaz oxydant peut alors pénétrer ces électrodes poreuses pour y être réduit. La partie de gaz oxydant n'ayant pas réagi est évacuée par le flux entraînant ces gaz, via des points de sortie du gaz oxydant 55.

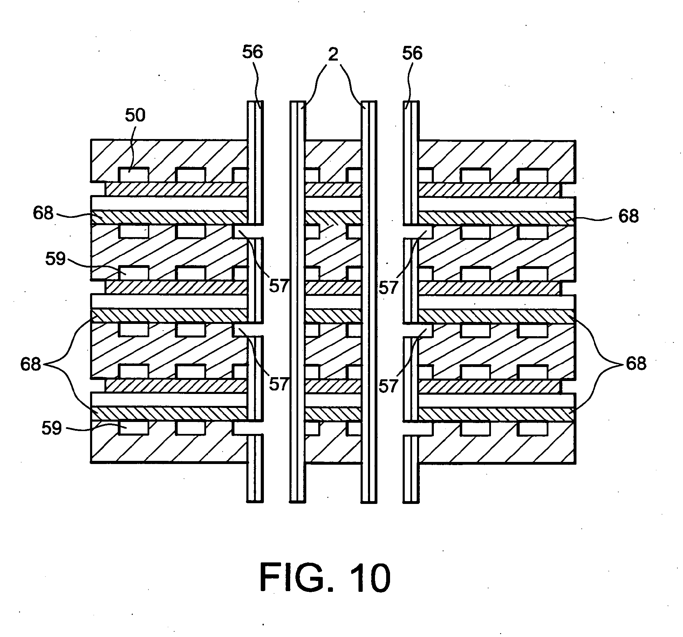

La figure 10 est une figure analogue montrant les tubes d'amenée du combustible 56, qui traversent l'empilement d'une façon analogue aux tubes d'amenée du gaz oxydant 53. De même, à chaque niveau de cellule élémentaire, des perçages d'alimentation en combustible 57 sont prévus, débouchant dans les canaux de distribution du combustible 59. Ces derniers sont interconnectés pour répartir de façon homogène le gaz oxydant sur toute la surface des anodes. Le combustible peut alors pénétrer ces dernières qui sont poreuses pour y être oxydé. La partie des combustibles n'ayant pas réagi est évacuée par le flux de gaz combustible, via des points de sortie de combustible 68.

Le principe de découplage de l'étanchéité est des contacts électriques est donc conservé dans ce type d'architecture. Cette séparation des gaz se fait donc par les quelques joints verticaux 52 qui viennent en fermant les tubes d'amenée du gaz oxydant 53 et les tubes d'amenée du combustible 56.

### Avantages de l'invention

L'architecture d'une telle pile à combustible permet donc de réaliser l'étanchéité de l'ensemble de la batterie dans un plan différent de celui de la continuité électrique de l'empilement. La tolérance dimensionnelle de l'une est alors indépendante de celle de l'autre et les contacts qu'elle nécessite s'effectuent dans des directions différentes. Cette architecture permet donc de s'affranchir de certaines tolérances d'usinage et d'assemblage.

Cette architecture présente également l'avantage d'étancher une pile à combustible au niveau de l'alimentation, de la récupération et de la séparation des gaz au niveau des cellules élémentaires, avec un seul joint pour tout l'empilement dans la première réalisation et de quatre joints dans la deuxième réalisation.

Ce type de pile à combustible présente l'avantage d'autoriser des dilatations axiales de l'ensemble par glissement des cellules élémentaires, des interconnecteurs, des diffuseurs cathodiques de fermeture dans le tube de confinement, grâce à ces joints verticaux qui sont visqueux à la température de fonctionnement. Les dilatations radiales sont absorbées géométriquement par déformation de ce ou de ces joints verticaux. La deuxième réalisation permet également de s'accommoder des dilatations radiales des éléments de l'empilement.

La première réalisation présente un autre avantage relatif au tube de confinement 1 qui forme un caisson hermétique pour les différents éléments constitutifs de l'empilement. Ceci permet de disposer dans un ensemble générateur plusieurs batteries en série et/ou en parallèle.

Cette structure de pile à combustible possède un système relativement simple de distribution ou de récupération des gaz. En effet, chaque gaz peut être introduit dans l'empilement par un point unique et en étant extrait par deux points pour l'ensemble de la batterie. Ce concept d'architecture permet de construire des piles à combustible peu coûteuses. Plusieurs formes d'empilement peuvent être envisagées, de même que toute taille de pile à combustible. Enfin, cette structure ne restreint pas le choix des matériaux utilisés pour constituer les différents éléments constitutifs de l'empilement.

## Revendications

1. Pile à combustible du type à oxyde solide (SOFC) constituée par un empilement de cellules élémentaires du type électrode/électrolyte/électrode, disposée en alternance avec des interconnecteurs (7), **caractérisée en ce qu'**elle comprend un unique joint qui est vertical (2, 32) fermé entourant l'empilement et un tube de confinement (1, 31), placé autour du joint vertical (2, 32).

2. Pile à combustible selon la revendication 1, **caractérisée en ce qu'**on utilise des trous latéraux de passage (40) dans le joint vertical (2, 32).

3. Pile à combustible selon la revendication 1, **caractérisée en ce que** des trous d'entrée ou de sortie (11, 12, 14, 15, 17 et 18), sont placés dans le tube de confinement (1, 31) pour assurer la distribution et l'échappement des gaz.

4. Pile à combustible selon la revendication 1, **caractérisée en ce que** le tube de confinement (31) possède une forme dite ouverte, c'est-à-dire une section en escargot, le joint vertical (32) ayant également une section correspondant, c'est-à-dire avec un diamètre progressif le long de son périmètre et doté d'une patte de prolongement radial (29) au niveau d'un recouvrement des deux extrémités (37) et (38) du tube de confinement (31) se trouvant à des diamètres différentes.

5. Pile à combustible de type à oxyde solide (SOFC) constituée d'un empilement de cellules élémentaires électrode/membrane/électrode, disposées en alternance avec des interconnecteurs et équipées de au moins deux tubes d'amenée de gaz combustible (56) et d'au moins deux tubes d'amenée du gaz oxydant (53) à l'intérieur de l'empilement,
**caractérisée en ce que** pour chaque tube d'amenée (53, 56), placé à l'intérieur de l'empilement, on utilise un joint vertical (52) unique et fermé autour de chaque tube d'amenée (53, 56), l'échappement des gaz se faisant par toute la surface externe de l'empilement.

## Claims

1. Solid oxide type fuel cell (SOFC) constituted by a stack of elementary cells of the electrode/electrolyte/electrode type, arranged alternately with interconnectors (7),
**characterised in that** it comprises a single closed vertical seal (2, 32) surrounding the stack, and
a containment tube (1, 31), placed around the vertical seal (2, 32).

2. Fuel cell according to claim 1, **characterised in that** lateral passage holes (40) are used in the vertical seal (2, 32).

3. Fuel cell according to claim 1, **characterised in that** inlet or outlet holes (11, 12, 14, 15, 17 and 18), are placed in the containment tube (1, 31) to assure the distribution and the release of the gases.

4. Fuel cell according to claim 1, **characterised in that** the containment tube (31) has a shape known as open, in other words of snail shaped section, the vertical seal (32) further having a corresponding section, in other words with a progressive diameter along its perimeter and equipped with a radial extension lip (29) at the level of an overlap of two ends (37) and (38) of the containment tube (31) located at different diameters.

5. Fuel cell consisting of a stack of electrode/membrane/electrode elementary cells, arranged alternately with interconnectors and equipped with at least two fuel gas supply tubes (56) and at least two oxidising gas supply tubes (53) inside the stack, **characterised in that** for each supply tube (53, 56), placed inside the stack, a single vertical seal (52) closed around each supply tube (53, 56) is used, the release of the gases taking place through the whole external surface of the stack.

## Patentansprüche

1. Festoxid-Brennstoffzelle (SOFC), umfassend eine Einzelzellengruppe vom Typ Elektrode/Elektrolyt/Elektrode, alternierend mit Interkonnektoren (7) angeordnet,
**dadurch gekennzeichnet, dass** sie eine einzelne vertikale, die Zellengruppe geschlossen umgebende Abdichtung (2, 32) sowie ein die vertikale Abdichtung (2, 32) umgebendes Umhüllungsrohr (1, 31) umfasst.

2. Brennstoffzelle nach Anspruch 1, **dadurch gekennzeichnet, dass** in der vertikalen Abdichtung (2, 32) seitliche Durchgangslöcher (40) verwendet werden.

3. Brennstoffzelle nach Anspruch 1, **dadurch gekennzeichnet, dass** Eingangs-oder Ausgangslöcher (11, 12, 14, 15, 17 und 18) in dem Umhüllungsrohr (1, 31) platziert sind, um die Verteilung und den Auslass der Gase zu gewährleisten.

4. Brennstoffzelle nach Anspruch 1, **dadurch gekennzeichnet, dass** das Umhüllungsrohr (31) eine sogenannte offene Form aufweist, das heißt einen schneckenförmigen Abschnitt, wobei die vertikale Abdichtung (32) ebenfalls einen entsprechenden Abschnitt umfasst, das heißt mit einem zunehmenden Durchmesser über den Kreisumfang und mit einer radialen Verlängerungsklaue (29) auf Höhe der Überlappung der beiden Enden (37) und (38) des Umhüllungsrohrs (31) ausgestattet, die sich auf unterschiedlichen Durchmessern befinden.

5. Festoxid-Brennstoffzelle (SOFC), umfassend eine Einzelzellengruppe vom Typ Elektrode/Membran/Elektrode, alternierend mit Interkonnektoren angeordnet und im Inneren der Zellengruppe mit wenigstens zwei Zuleitungen für Brenngas (56) und wenigstens zwei Zuleitungen für oxidierendes Gas (53) ausgestattet,
dadurch gekenntzeichnet, dass für jede im Inneren der Zellengruppe platzierte Zuleitung (53, 56) eine einzelne und um jede Zuleitung (53, 65) geschlossene Vertikaldichtung (52) verwendet wird, wobei der Auslass der Gase über die gesamte Außenfläche der Zellengruppe erfolgt.
